# EUROPÄISCHE PATENTSCHRIFT

(11) **EP 2 906 448 B1**
(45) Veröffentlichungstag und Bekanntmachung des Hinweises auf die Patenterteilung: **20.09.2017**
(21) Anmeldenummer: 13773813.4
(22) Anmeldetag: 09.10.2013
(51) Int. Cl.: B60R 11/04

(54) **VORRICHTUNG ZUR AUFNAHME EINER KAMERA MIT VIER GELENKEN**
DEVICE FOR HOLDING A CAMERA HAVING FOUR JOINTS
DISPOSITIF DESTINÉ À LOGER UNE CAMÉRA, POURVU DE QUATRE ARTICULATIONS

(30) Priorität: 10.10.2012 DE 102012109611
(43) Veröffentlichungstag der Anmeldung: 19.08.2015
(73) Patentinhaber: Huf Hülsbeck & Fürst GmbH & Co. KG, 42551 Velbert (DE)
(72) Erfinder: BUSCHMANN, Gerd, 42553 Velbert (DE)
(74) Vertreter: Vogel, Andreas
(86) Internationale Anmeldenummer: PCT/EP2013/071085
(87) Internationale Veröffentlichungsnummer: WO 2014/056997

(56) Entgegenhaltungen:
- DE-A1-102006 023 103
- DE-A1-102010 060 573

## Beschreibung

Die Erfindung betrifft eine Vorrichtung zur Aufnahme einer Kamera, die insbesondere als Einparkhilfe eines Kraftfahrzeuges dienen kann. Die Vorrichtung umfasst ein Gehäuse, in dem die Kamera austauschbar aufgenommen werden kann, und einem Getriebe, welches dazu dient, die Kamera zwischen einer Ruheposition und einer Betriebsposition zu bewegen.

Vorrichtungen mit einer Kamera, die zur Bilderfassung des Außenbereiches eines Kraftfahrzeuges dienen, sind aus dem Stand der Technik bereits bekannt. Derartige Vorrichtungen umfassen ein Gehäuse, in dem die Kamera zwischen einer Ruheposition und einer Betriebsposition beweglich aufgenommen ist. Beispielsweise können derartige Kameras im Bereich des assistierten Einparkens von Kraftfahrzeugen zum Einsatz kommen. Wird beispielsweise der Rückwärtsgang des Kraftfahrzeuges eingelegt, verfährt die Kamera von der Ruheposition in die Betriebsposition, wobei die Kamera wenigstens teilweise aus dem Gehäuse herausgefahren wird. Dadurch wird der Bereich hinter dem Kraftfahrzeug durch die Kamera bildlich erfasst und auf einem Display für den Fahrer des Kraftfahrzeuges angezeigt. Ist die Rückwärtsfahrt beendet und nimmt der Fahrer des Kraftfahrzeuges den Rückwärtsgang wieder heraus, kann die Kamera von der Betriebsposition wieder zurück in die Ruheposition verschwenken.

In der DE 10 2009 008 281 A1 ist eine Vorrichtung zur Aufnahme einer Kamera offenbart, die fest im vorhandenen Gehäuse installiert ist. Dabei hat sich als Nachteil herausgestellt, dass die Vorrichtung lediglich eine bestimmte Kamera aufnehmen kann, sodass die Wartung und der Austausch der Kamera nicht gewährleistet werden kann. Die Vorrichtung sieht ferner ein Deckelelement zum Schutz der Kamera in der Ruheposition vor, wobei das Deckelelement ebenfalls fest am Gehäuse angeordnet ist. Hierbei ist es von Nachteil, dass bei einem Unfall, wenn das Deckelelement beschädigt wird, die Vorrichtung gleichzeitig irreparabel beschädigt wird. Des Weiteren ist ein Getriebe vorgesehen, welches einen Verstellmechanismus für die Kamera und einen weiteren Verstellmechanismus für ein Deckelelement umfasst. Der erste Verstellmechanismus bewegt die Kamera zwischen einer Ruheposition und einer Betriebsposition und der zweite Verstellmechanismus bewegt das Deckelelement zwischen einer Schließposition und einer Öffnungsposition. Dies macht die Vorrichtung bautechnisch kompliziert, die Vorrichtung benötigt zu viele komplizierte Bauteile und einen großen Bauraum, wodurch die Herstellung und die Montage der Vorrichtung aufwendig und kostenintensiv sind. DE 10 2006 023103 A1 offenbart eine Vorrichtung zur Aufnahme einer Kamera, die insbesondere als Einparkhilfe eines Kraftfahrzeuges dient, mit einem Gehäuse, in dem ein Schlitten bewegbar aufgenommen ist, an dem die Kamera befestigbar ist, wobei der Schlitten durch ein Getriebe antreibbar ist, welches Getriebe ein erstes Schaukelelement und ein zweites Schaukelelement aufweist, so dass der Schlitten zwischen einer Ruheposition und einer Betriebsposition verstellbar ist. Der Erfindung liegt daher die objektive Aufgabe zugrunde, eine einfache, kostengünstige und kompakte Vorrichtung zur Aufnahme einer Kamera zu schaffen, welche die oben genannten Nachteile vermeidet. Insbesondere soll die Vorrichtung verschiedene Kameras aufnehmen können, einen wirksamen Schutz der Kameraeinheit ermöglichen und wenige Bauelemente aufweisen.

Diese Aufgabe wird erfindungsgemäß durch eine Vorrichtung gemäß sämtlichen Merkmalen des unabhängigen Patentanspruches 1 gelöst. Die Erfindung sieht hierzu vor, dass die Vorrichtung einen Schlitten aufweist, der verschiedene Kameras austauschbar aufnehmen kann, und dass der Schlitten mittels eines Getriebes bewegt wird, welches ein erstes Schaukelelement und ein zweites Schaukelelement umfasst, die mit dem Schlitten gelenkig verbunden sind. Der Erfindungsgedanke liegt dabei darin, dass jedes Schaukelelement derart drehbar am Gehäuse gelagert ist und dass der Schlitten derart drehbar an jedem Schaukelelement gelagert ist, dass der Schlitten zwischen einer Ruheposition und einer Betriebsposition mindestens eine erste Bewegungsphase und eine zweite Bewegungsphase ausführt. Der Schlitten wird dabei durch die zweiphasige Bewegung derart geführt, dass der Platz zur Aufnahme des Schlittens reduziert wird und die Vorrichtung mithin einen einfachen Aufbau mit wenig Bauraum erfordert.

Vorteilhafterweise kann der Schlitten eine gehäuseseitige Montageöffnung aufweisen, um eine Kamera austauschbar aufzunehmen. Durch die Montageöffnung kann die Kamera auf eine einfache Weise eingeführt und wieder entnommen werden. Außerdem kann die Montageöffnung zur Aufnahme von unterschiedlichen Kameramodellen ausgebildet sein. Die Montageöffnung kann zudem derart ausgeführt werden, dass die Kamera im eingesetzten Zustand durch einen Form- und/oder Kraftschluss zuverlässig im Schlitten gehalten wird. Ferner kann der Schlitten Rast- und/oder Klemmelemente in der Montageöffnung aufweisen, die mit komplementären Halteelementen der Kamera zusammenwirken können, sodass die Kamera sicher im Schlitten angeordnet wird. Zudem kann der Schlitten mit einer nach außen zeigenden Aufnahmeöffnung ausgeführt sein, durch welche die Kamera nach außen gerichtet sein kann. Durch die Öffnung kann ein Objektiv der Kamera in der Betriebsposition des Schlittens den Außenbereich eines Fahrzeugs bildlich erfassen.

Erfindungsgemäß kann das Getriebe eine erste unbewegliche bzw. eine starre Achse am Gehäuse aufweisen, um die das erste Schaukelelement verschwenkt werden kann, und eine zweite unbewegliche bzw. eine starre Achse am Gehäuse aufweisen, um die das zweite Schaukelelement verschwenkt werden kann. Konstruktionsgemäß kann die erste Achse parallel zur zweiten Achse verlaufen. Diese Anordnung der ersten und der zweiten Achse ermöglicht, dass zumindest am Anfang der ersten Bewegungsphase die Schaukelelemente, die den Schlitten an zwei gegenüberliegenden Unterseiten tragen, synchron um einen bestimmten Winkel verschwenkt werden. Dabei wird eine hintere Unterseite des Schlittens um die erste Achse und die vordere Unterseite um die zweite Achse verschwenkt.

Gemäß der vorliegenden Erfindung können das erste Schaukelelement mittels eines ersten Gelenks am Gehäuse und das zweite Schaukelelement mittels eines zweiten Gelenks am Gehäuse gelagert sein. Hierbei kann die erste Achse durch das erste Gelenk und die zweite Achse durch das zweite Gelenk verlaufen. Die erste und die zweite Achse, die starr am Gehäuse angeordnet sein können, bestimmen die Rotations- bzw. die Schwenkachsen der Schaukelelemente und ermöglichen eine sichere und stabile Führung der Schaukelelemente und somit des Schlittens für die Kamera. Die Bewegung der Schaukelelemente und des Schlittens kann dabei links- und rechtsseitig durch die Gelenke begrenzt werden, wobei die Schwenkarme der Schaukelelemente in den Ebenen bewegt werden, die sich senkrecht zur ersten und zur zweiten Achse durch das erste und durch das zweite Gelenk verlaufen. Wenn die Schaukelelemente eine stabile Schwenkbewegung ausführen, erfährt auch der Schlitten eine stabile Schwenkbewegung zwischen der Ruheposition und der Betriebsposition.

Gemäß einem besonderen Vorteil kann das Getriebe eine dritte bewegliche Achse am ersten Schaukelelement aufweisen, um die der Schlitten verschwenkt werden kann, und eine vierte bewegliche Achse am zweiten Schaukelelement, um die der Schlitten verschwenkt werden kann. Erfindungsgemäß kann das Getriebe derart aufgebaut sein, dass sich die dritte Achse während der Bewegung des Schlittens parallel zur vierten Achse bewegt. Erfindungsgemäß können die dritte und die vierte Achse jeweils um die erste und um die zweite Achse zusammen mit den jeweiligen Schaukelelementen mitgeschwenkt werden. Folglich kann der Schlitten nicht nur mit der hinteren Unterseite um die erste unbewegliche Achse und mit der vorderen Unterseite um die zweite unbewegliche Achse verschwenken sondern auch mit einer hinteren Oberseite um die dritte bewegliche Achse und mit einer vorderen Oberseite um die vierte bewegliche Achse. Dadurch, dass die dritte und die vierte Achse selbst verschwenkt werden, kann der Schlitten eine zweiphasige, wellenartige Bewegung ausführen. Mithin kann erreicht werden, dass der erforderliche Bauraum zur Anordnung sowie zur Führung des Schlittens und somit der Kamera optimal reduziert wird. Dabei ist es von besonderem Vorteil, dass die Vorrichtung zur Aufnahme der Kamera sowohl in der Länge als auch in der Breite geringe Baumassen aufweisen kann.

Erfindungsgemäß kann das erste Schaukelelement ein erstes Verbindungselement aufweisen, an welchem der Schlitten mittels eines dritten Gelenks drehbar gelagert sein kann, und das zweite Schaukelelement ein zweites Verbindungselement, an welchem der Schlitten mittels eines vierten Gelenks drehbar gelagert sein kann. Hierbei kann die dritte Achse durch das dritte Gelenk und die vierte Achse durch das vierte Gelenk verlaufen. Dadurch wird der Vorteil erreicht, dass der Schlitten stabil an vier Seiten um vier verschiedene parallele Achsen verschwenkt und gleichzeitig nach vorne in die Betriebsposition und zurück in die Ruheposition befördert werden kann.

Erfindungsgemäß kann das Getriebe vier Gelenke umfassen, um den Schlitten zwischen der Ruheposition und der Betriebsposition zu führen. Jeweils vier Gelenke können entsprechend zwischen dem Gehäuse und einer ersten Seite des Schlittens und zwischen dem Gehäuse und einer zweiten Seite des Schlittens angebracht werden. Aus vier Gelenken an jeder Seite des Schlittens können zwei Gelenke das Gehäuse und die Schaukelelemente verbinden und zwei weitere Gelenke können die Schaukelelemente jeweils mit einer hinteren und einer vorderen Unterseite des Schlittens verbinden. Der Schlitten kann somit mittels des ersten und des zweiten Gelenks um die erste und um die zweite Achse derart verschwenkt werden und mittels des dritten und des vierten Gelenks um die bewegliche dritte Achse und um die bewegliche vierte Achse derart gekippt werden, dass der Schlitten eine wellenartige bzw. eine sinusartige Bewegung zwischen der Ruheposition und der Bewegungsposition durchläuft. Die vier Gelenke jeweils an einer Seite des Schlittens begrenzen die seitliche Bewegungsfreiheit des Schlittens und führen den Schlitten sicher und stabil nach vorne aus dem Gehäuse in die Betriebsposition und nach hinten in das Gehäuse in die Ruheposition.

Erfindungsgemäß kann in der ersten Bewegungsphase eine hintere Unterseite des Schlittens sich um die erste Achse und eine vordere Unterseite des Schlittens sich um die zweite Achse verschwenken. Weiterhin kann erfindungsgemäß vorgesehen sein, dass während der zweiten Bewegungsphase eine hintere Oberseite des Schlittens eine Kippbewegung um die dritte Achse und eine vordere Oberseite des Schlittens eine Kippbewegung um die vierte Achse ausführen kann.

Es kann vorgesehen sein, dass das Getriebe derart aufgebaut sein kann, dass während der zweiten Bewegungsphase eine Bewegung des Schlittens um die zweite Achse blockiert ist. Dabei kann der Schlitten in einer ersten Bewegungsphase mittels der sich synchron schwenkenden Schaukelelemente zumindest zum Teil in die Richtung der Betriebsposition mitgeschwenkt werden. Anschließend kann in der zweiten Bewegungsphase das zweite Schaukelelement, beispielsweise an einem Anschlag im vorderen Teil des Gehäuses stehen bleiben, wobei das erste Schaukelelement weiterhin eine schwenkende Bewegung und einen größeren Bogen ausführt, und wobei die hintere Oberseite des Schlittens nach oben bewegt wird und gleichzeitig nach vorne gekippt wird während die vordere Oberseite des Schlittens nur nach vorne gekippt wird.

Alternativ kann vorgesehen sein, dass das Getriebe derart aufgebaut sein kann, dass die erste Bewegungsphase und die zweite Bewegungsphase zumindest teilweise gleichzeitig erfolgen. Dabei können die hintere und die vordere Unterseite des Schlittens um die erste und um die zweite Achse verschwenkt werden, wobei während der Schlitten in der Schwenkbewegung nach oben verfährt, die Oberseiten des Schlittens nach vorne zu kippen beginnen. Die hintere Ober- und Unterseite des Schlittens durchläuft dabei einen größeren Bogen und die vordere Ober- und Unterseite des Schlittens einen kleineren Bogen. Insgesamt wird somit sichergestellt, dass der Schlitten eine wellenartige bzw. eine sinusartige Bewegung durchläuft.

Erfindungsgemäß kann das erste Schaukelelement einen Führungsarm aufweisen, welcher mit einer Führung ausgeführt sein kann. Dabei kann die Führung mit einem Gleitelement eines Antriebes zusammenwirken, um das erste Schaukelelement in Bewegung zu setzen. Vorteilhafterweise wird lediglich ein Antrieb benötigt, um das Getriebe in Gang zu setzen. Hierzu kann erfindungsgemäß ein Zahnradantrieb vorgesehen sein. Der Antrieb kann durch das Gleitelement auf nur einen Arm eines der zwei Schaukelelemente einwirken, um die beiden Schaukelelemente und somit den Schlitten in Bewegung zu setzen. Die Führung kann als eine Öffnung in einer Gehäusewand und/oder als eine Kulisse und/oder als eine Spur innenseitig an der Gehäusewand ausgebildet sein. Die Führung kann erfindungsgemäß bogenförmig ausgeführt sein, um sicherzustellen, dass das erste Schaukelelement einen größeren Bogen verfahren kann als das zweite Schaukelelement und dass der Schlitten eine sinusartige Bewegung ausführen kann, wodurch eine kompakte Gesamtanordnung geschaffen wird.

Vorteilhafterweise kann das Gehäuse eine Öffnung aufweisen, durch die der Schlitten in der Betriebsposition hinausragen kann. Weiterhin kann ein Deckelelement vorgesehen sein, das in der Ruheposition des Schlittens die Öffnung abschließen kann. Das Deckelelement kann unter einem Herstellerzeichen am Heck des Fahrzeugs angeordnet werden oder das Herstellerzeichen selbst sein. Das Deckelelement kann dabei die Kamera in der Ruheposition abdecken und schützen. Weiterhin kann das Deckelelement eine abdichtende Funktion erfühlen.

Erfindungsgemäß kann eine Schutzmembran vorgesehen sein, die den freien Raum zwischen der Öffnung im Gehäuse und dem Schlitten abdichtend abschließen kann, um das Eindringen von Schmutzpartikeln und Feuchtigkeit in das Gehäuse zu verhindern und die Kamera vor Witterungseinflüssen zu schützen. Die Schutzmembran kann in Form einer Balgenmembran, insbesondere schlauchförmig, ausgeformt sein. Dabei kann ein Ende der balgenförmigen Schutzmembran an einem Rand der Öffnung außenseitig am Gehäuse angebracht werden. Dieses Ende der Schutzmembran kann dabei durch einen Form- und/oder Kraftschluss zwischen dem Rand der Öffnung und einem Gehäusedeckel befestigt bzw. festgeklemmt und/oder auf den Rand der Öffnung geklebt werden. Das zweite Ende der balgenförmigen Schutzmembran kann an einer Öffnung, insbesondere der Aufnahmeöffnung, des Schlittens außenseitig befestigt werden. Dieses Ende der Schutzmembran kann durch einen Spannring am Rand der Öffnung gehalten werden und/oder am Rand der Öffnung geklebt werden. Die Schutzmembran kann dabei aus einem elastischen Material ausgeführt sein. Während der Bewegung des Schlittens kann die Schutzmembran verformt werden. Vorteilhafterweise schließt die Membran die Öffnung im Gehäuse abdichtend ab, sodass weder Schmutz noch Feuchtigkeit ins Gehäuse eindringen und die Kamera beschädigen kann.

Zudem kann vorgesehen sein, dass die Öffnung mit einem Kragenelement ausgeführt sein kann, an welchem das Deckelelement geräuschlos anliegen kann und gegebenenfalls abfedern kann, wenn der Schlitten sich in der Ruheposition befindet, wobei insbesondere das Kragenelement aus einem elastischen Material ausgebildet sein kann.

Das Gehäuse der Vorrichtung und/oder das Getriebe und/oder der Schlitten und/oder die Schaukelelemente können aus einem beliebigen Kunststoff, Metall und dergleichen ausgebildet sein, das insbesondere einen höheren Härtegrad aufweist als das Material der Schutzmembran und/oder des Kragenelementes.

Vorteilhafterweise kann vorgesehen sein, dass das Deckelelement keines besonderen Antriebes bedarf. Erfindungsgemäß kann das Deckelelement durch die Kamera während der Bewegung aus der Ruheposition in die Bewegungsposition in eine Öffnungsposition bzgl. der Kamera aufgestoßen werden. Zurück in eine Schließposition kann der Deckel unter Wirkung der eigenen Schwerkraft fallen und/oder durch ein Verbindungselement am Schlitten zugezogen werden. Der Schlitten kann dabei mit dem Deckelelement derart in mechanischer Wirkverbindung stehen, dass während der Bewegung zwischen der Ruheposition in die Betriebsposition der Schlitten das Deckelelement zwischen der Öffnungsposition und der Schließposition mitbewegt. Hierzu kann vorgesehen sein, dass der Schlitten mindestens einen Stößel aufweisen kann und/oder der Schlitten mit dem Deckelelement form- und/oder kraftschlüssig verbunden sein kann.

Vorteilhafterweise kann das Deckelelement mittels eines Drehgelenks und/oder formschlüssig und/oder kraftschlüssig, drehbar und/oder lösbar am Gehäuse angeordnet sein. Hiermit wird sichergestellt, dass das Deckelelement ohne angetrieben zu werden durch die Kamera oder den Schlitten aufgestoßen werden kann und/oder zurückgezogen werden kann. Es bedarf lediglich einer drehbaren Verbindung des Deckelelementes mit dem Gehäuse. Weiterhin kann der Deckel abnehmbar bzw. lösbar ausgeführt sein. Dadurch wird ein besonderer Vorteil erreicht, dass im Falle eines Zusammenstoßes mit einem anderen Fahrzeug oder Gegenstand das Deckelelement zwar beschädigt und sogar abfallen kann, jedoch die Kamera nicht durch Einwirkung auf das Deckelelement in Mitleidenschaft gezogen werden kann. Sollte das Deckelelement in einer geöffneten Position verharren, so wird es keine Gefahr für das Innere der Vorrichtung darstellen und bei einer mechanischen Einwirkung auf das Deckelelement lediglich abfallen.

Erfindungsgemäß können die Merkmale der Beschreibung der erfindungsgemäßen Vorrichtung sowohl einzeln für sich als auch in den verschiedensten Kombinationen erfindungswesentlich sein. Weitere, die Erfindung verbessernde Maßnahmen werden nachstehend gemeinsam mit der Beschreibung der bevorzugten Ausführungsbeispiele der Erfindung anhand der Figuren näher dargestellt. Es zeigen:
- Fig. 1: eine erfindungsgemäße Vorrichtung in einer perspektivischen Ansicht,
- Fig. 2: die erfindungsgemäße Vorrichtung in einer Explosionsansicht,
- Fig. 3: ein erfindungsgemäßes Getriebe in einer Explosionsansicht,
- Fig. 4a: eine seitliche Ansicht der erfindungsgemäßen Vorrichtung in einer Ruheposition eines Schlittens,
- Fig. 4b: eine seitliche Ansicht der erfindungsgemäßen Vorrichtung in einer Position zwischen der Ruheposition und einer Betriebsposition des Schlittens,
- Fig. 4c: eine seitliche Ansicht der erfindungsgemäßen Vorrichtung in der Betriebsposition des Schlittens,
- Fig. 5a: eine perspektivische Ansicht der erfindungsgemäßen Vorrichtung in der Ruheposition des Schlittens,
- Fig. 5b: eine perspektivische Ansicht der erfindungsgemäßen Vorrichtung in der Betriebsposition des Schlittens,
- Fig. 6a: eine perspektivische Ansicht der erfindungsgemäßen Vorrichtung in der Ruheposition des Schlittens aus einem anderen Blickwinkel als in den Figuren 5a und 5b, und
- Fig. 6b: eine perspektivische Ansicht der erfindungsgemäßen Vorrichtung in der Betriebsposition des Schlittens aus dem Blickwinkel der Figur 6a.

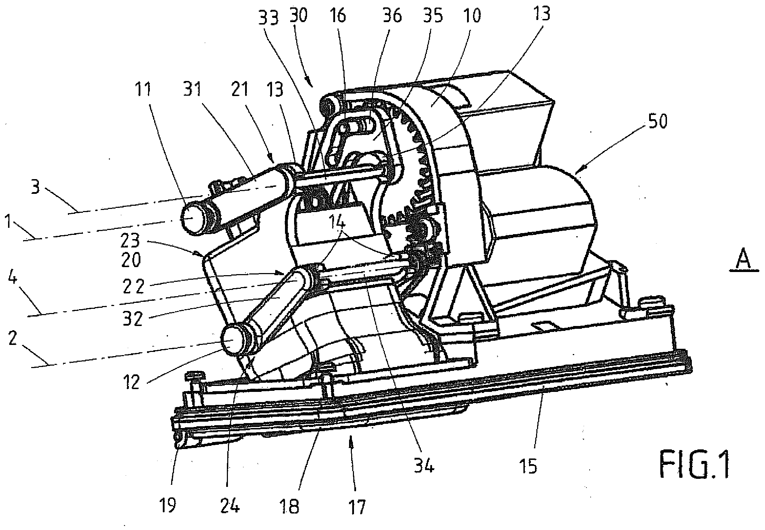

Figur 1 zeigt eine erfindungsgemäße Vorrichtung, die einen Schlitten 20, der eine Kamera 40 austauschbar aufnehmen kann, und ein Getriebe 30 aufweist, welches den Schlitten 20 zwischen einer Ruheposition A und einer Betriebsposition B bewegen kann. Das Getriebe 30 weist ein erstes Schaukelelement 31 und ein zweites Schaukelelement 32 auf, die mit dem Schlitten 20 gelenkig verbunden sind. Die Schaukelelemente 31, 32 sind drehbar mittels eines ersten 11 und eines zweiten Gelenks 12 an einem Gehäuse 10 gelagert. Die Gelenke 11,12 sind dabei in Form von Stiften bzw. Schrauben ausgebildet, die durch Durchbrüche in den Armen der Schaukelelemente 31, 32 geführt werden können und an den Enden mittels eines Schraubenkopfes bzw. einer Mutter begrenzt werden können. Die Schaukelelemente 31, 32 weisen jeweils ein Verbindungselement 33, 34 auf, das in Form eines Stabes ausgebildet ist und jeweils zwei Arme der Schaukelelemente 33, 34 verbindet. An den Verbindungselementen 33, 34 ist der Schlitten 20 mittels eines dritten 13 und eines vierten Gelenks 14 schwenkbar angeordnet. Durch die vier Gelenke 11, 12, 13, 14 kann der Schlitten 20 eine zweiphasige Bewegung zwischen der Ruheposition A und der Betriebsposition B ausführen. Die Figur 1 zeigt den Schlitten 20 in einer eingefahrenen Ruheposition A, in der die Kamera 40 innerhalb des Gehäuses 10 geschützt durch ein Deckelelement 18 angeordnet ist, welches eine Öffnung 17 in einem Gehäusedeckel 15 abschließt. Das Deckelelement 18 ist mittels eines Drehgelenks 19 lösbar am Gehäusedeckel 15 gelagert und kann mit dem Schlitten 20 zwischen einer Öffnungsposition und einer Schließposition mitgeschwenkt werden, wenn sich der Schlitten 20 zwischen einer Ruheposition A und einer in Figur 1 nicht dargestellten Betriebsposition B verschwenkt.

Das Getriebe 30 weist eine erste unbeweglich am Gehäuse 10 angeordnete Achse 1 auf, um die das erste Schaukelelement 31 verschwenkt werden kann, und eine zweite unbeweglich am Gehäuse 10 angeordnete Achse 2, um die das zweite Schaukelelement 32 verschwenkt werden kann. Die erste Achse 1 verläuft dabei parallel zur zweiten Achse 2, wobei eine hintere Unterseite 21 des Schlittens 20 um die erste Achse 1 und die vordere Unterseite 22 des Schlittens 20 um die zweite Achse 2 verschwenkbar ist. Die erste Achse 1 verläuft erfindungsgemäß durch das erste Gelenk 11 und die zweite Achse 2 durch das zweite Gelenk 12. Die Erstreckungsrichtung der Verbindungselemente 33, 34 bestimmt jeweils eine dritte bewegliche Achse 3 am ersten Schaukelelement 31 und eine vierte bewegliche Achse 4 am zweiten Schaukelelement 32, um die der Schlitten 20 ebenfalls verschwenkt werden kann. Während der Bewegung des Schlittens 20 bewegt sich die dritte Achse 3 parallel zur vierten Achse 4, wobei die dritte 3 und die vierte Achse 4 jeweils um die erste 1 und um die zweite Achse 2 zusammen mit dem jeweiligen Schaukelelement 31, 32 mitgeschwenkt werden. Dabei bewegt sich der Schlitten 20 mit der hinteren Unterseite 21 um die erste unbewegliche Achse 1 und mit der vorderen Unterseite 22 um die zweite unbewegliche Achse 2. Gleichzeitig dazu bewegt sich der Schlitten 20 auch mit einer hinteren Oberseite 23 um die dritte bewegliche Achse 3 und mit einer vorderen Oberseite 24 um die vierte bewegliche Achse 4 in eine entgegengesetzte Schwenkrichtung.

Das erste Schaukelelement 31 weist einen Führungsarm 35 auf, welcher mit einer Führung 36 ausgeführt ist. Dabei wirkt die Führung 36 mit einem Gleitelement 16 eines Antriebes 50 zusammen, um das erste Schaukelelement 31 in Bewegung zu setzen. Der Antrieb 50 setzt somit das Getriebe 30 in Gang, wobei die Wirkung auf das erste Schaukelelement 31 über den Schlitten 20 auch auf das zweite Schaukelelement 32 übertragen wird. Der Antrieb 50 ist beispielsweise als ein Zahnradantrieb dargestellt. Die Führung 36 ist gemäß der gezeigten Ausführungsalternative als eine Nut in dem Führungsarm 35 des ersten Schaukelelementes 31 ausgebildet. Alternativ ist es denkbar, dass die Führung 36 als eine Kulisse und/oder als eine Spur innenseitig an der Gehäusewand ausgebildet sein kann. Die Führung 36 ist erfindungsgemäß bogenförmig ausgeführt mit einem Scheitelpunkt und zwei Anschlagpunkten. In der Ruheposition A des Schlittens 20 kann das Gleitelement 16, angetrieben durch den Antrieb 50, bis zu dem Anschlagpunkt verfahren, der sich weiter von der Achse 1 befindet als der andere Anschlagpunkt. Während der Antrieb 50 weiterhin das Gleitelement 16 im Urzeigersinn in der Figur 1, in Richtung zum Gehäusedeckel 15 antreibt, bewirkt das Gleitelement 16, dass der Führungsarm 35 des ersten Schaukelelementes 31 um die erste Achse 1 ebenfalls in Richtung zum Gehäusedeckel 15 verschwenkt wird.

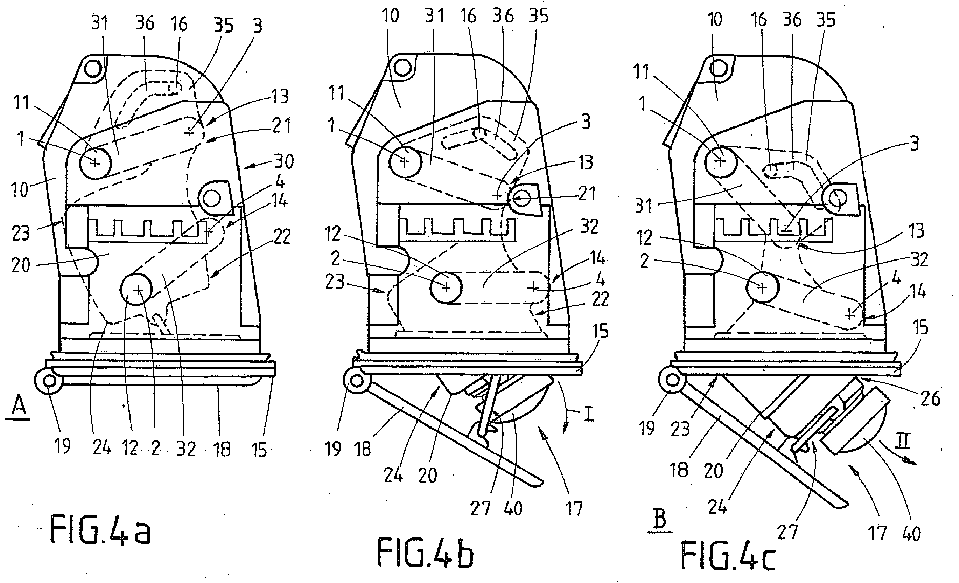

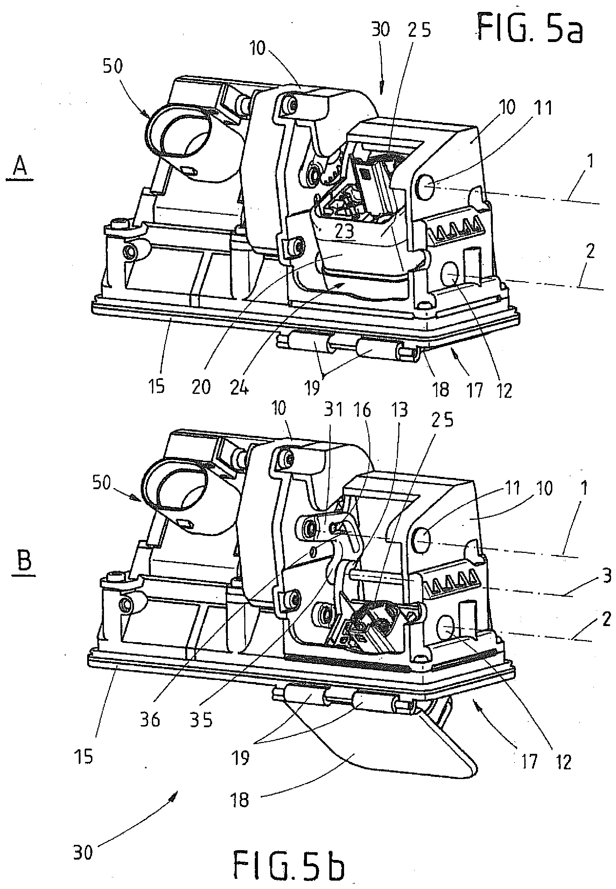

Am Anfang einer ersten Bewegungsphase I, die näher in den Figuren 4a, 4b beschrieben wird, verschwenkt das erste Schaukelelement 31 zunächst synchron mit dem zweiten Schaukelelement 32, auf das die Wirkung des Gleitelementes 16 über den Schlitten 20 übertragen wird. Dadurch, dass der Schlitten 20 gelenkig an den Schaukelelementen 31, 32 angeordnet ist und durch den Impulsverlust an den Gelenken 13, 14 wird das zweite Schaukelelement 32 etwas abgebremst, während das erste Schaukelelement 31 einen größeren Bogen verfährt als das zweite Schaukelelement 32. Als Folge gleitet das Gleitelement 16 während der Schwenkbewegung des ersten Schaukelelementes 31 in der Führung 36 in Richtung zum Scheitelpunkt. Dies ermöglicht eine Schwenkbewegung des ersten Schaukelelementes 31 um einen größeren Winkel als die Schwenkbewegung des zweiten Schaukelelementes 32, da der wirksame Schwenkradius des Führungsarmes 35 in Richtung zum Scheitelpunkt der Führung 36 kleiner wird als im Anschlagpunkt, der weiter von der ersten Achse 1 ist. In der ersten Bewegungsphase I schwenkt der Schlitten 20 zunächst mit der hinteren Unterseite 21 um die erste Achse 1 und mit der vorderen Unterseite 22 um die zweite Achse 2. Durch den Impulsverlust an den Gelenken 13, 14 wird diese Schwenkbewegung abgebremst bis das erste Schaukelelement 31 einen noch weiteren Bogen verfährt und ab einem bestimmten Punkt auf die hintere Unterseite 21 des Schlittens 20 in eine entgegengesetzte Richtung drückt als das zweite Schaukelelement 32 auf die vordere Unterseite 22. Dies bewirkt, dass der Schlitten 20 anfängt, um die beweglichen Achsen 3, 4 zu kippen. Mithin erfährt der Schlitten 20 eine sinusartige Bewegung zwischen der Ruheposition A, wie gezeigt in Figur 1, und der Betriebsposition B, die unten in der Beschreibung der Figuren 4c, 5b und 5b ausführlicher dargestellt wird.

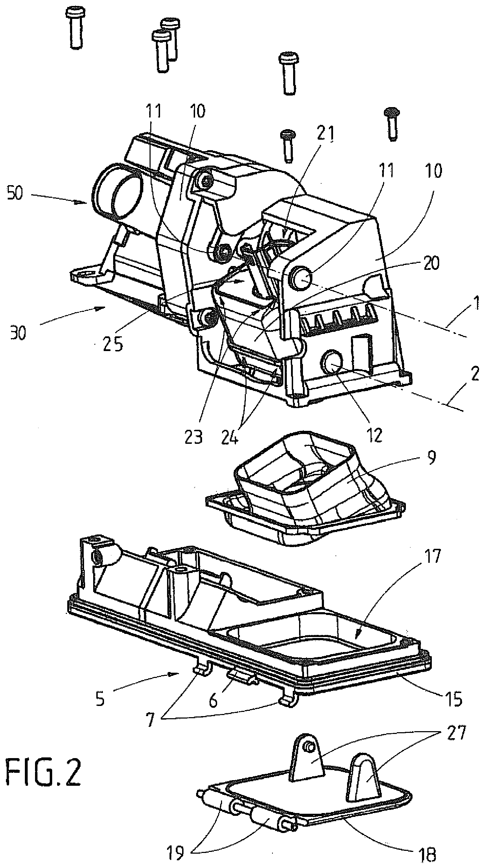

Die Figur 2 zeigt die erfindungsgemäße Vorrichtung in einer Explosionsansicht, mit einem Schlitten 20 für eine Kamera 40 und einem Getriebe 30 zum Antreiben des Schlittens 20 zwischen einer Ruheposition A und einer Betriebsposition B. Das Getriebe 30 weist ein erstes Schaukelelement 31 und ein zweites Schaukelelement 32 für den Schlitten 20 auf, die mittels eines ersten 11 und eines zweiten Gelenks 12 an einem Gehäuse 10 gelagert sind und in Figur 1 und in den Figuren 4a, 4b und 4c deutlicher dargestellt sind. Die Schaukelelemente 31, 32 können durch einen Antrieb 50 um eine erste 1 und eine zweite Achse 2 verschwenkt werden, wobei die erste Achse 1 durch das erste Gelenk 11 und um die zweite Achse 2 durch das zweite Gelenk 12 verläuft. Eine hintere Unterseite 21 des Schlittens 20 kann dabei um die erste Achse 1 und eine nicht dargestellte vordere Unterseite 22 des Schlittens 20 um die zweite Achse 2 verschwenkt werden. Außerdem kann der Schlitten 20 mit einer hinteren Oberseite 23 um eine dritte zusammen mit dem ersten Schaukelelement 31 bewegliche Achse 3 und mit einer vorderen Oberseite 24 um eine vierte zusammen mit dem zweiten Schaukelelement 32 bewegliche Achse 4 verschwenkt werden, wobei die dritte 3 und die vierte Achse 4 besser in Figur 1 und den Figuren 4a bis 4c zu erkennen sind.

Der Schlitten 20 weist ferner eine Montageöffnung 25 auf, durch welche die Kamera 40 austauschbar in der Vorrichtung aufgenommen werden kann. Das Gehäuse 10 der Vorrichtung nimmt die Schaukelelemente 31, 32 und den Schlitten 20 mit der Kamera 40 auf. Das Gehäuse 10 wird mit einem Gehäusedeckel 15 verschraubt. Im Gehäusedeckel 15 ist dabei eine Öffnung 17 vorgesehen, durch die die Kamera 40 in einem ausgefahrenen Zustand herausragen kann. Zwischen dem Gehäusedeckel 15 und dem Schlitten 20 ist eine Schutzmembran 9 angeordnet, die als eine Balgenmembran ausgeführt ist. Dabei ist ein Ende der Schutzmembran 9 zwischen dem Gehäusedeckel 15 und dem Rand des Gehäuses 10 eingeklemmt und/oder verschraubt und/oder eingeklebt, welcher Rand die Öffnung 17 definiert. Das andere Ende der Schutzmembran 9 ist um den Schlitten 20 an dem Rand einer nicht dargestellten Aufnahmeöffnung 26 für die Kamera 40 verspannt.

Außerdem ist außenseitig ein Deckelelement 18 vorgesehen, welches mittels eines Drehgelenks 19 gelenkig und lösbar am Gehäusedeckel 15 angeordnet ist. Der Gehäusedeckel 15 weist hierzu ein Lager 5 auf, welches ein inneres Lagerelement 6 und zwei äußere Lagerelemente 7 umfasst, um das Drehgelenk 19 schwenkbar zu lagern. Das innere Lagerelement 6 ist dabei zu einer Seite halb offen und die äußere Lagerelemente 7 sind zu einer anderen Seite halb offen, um das Drehgelenk 19 lösbar aufzunehmen. Das Deckelelement 18 kann mit dem Schlitten 20 zwischen einer Öffnungsposition und einer Schließposition mitgeschwenkt werden, wenn sich der Schlitten 20 zwischen einer Ruheposition A in Figur 4a und einer Betriebsposition B der Figur 4c verschwenkt. Das Deckelelement 18 weist dabei ein lösbares Verbindungselement 27 auf, durch welches es lösbar mit dem Schlitten 20 verbunden werden kann. Das Deckelelement 18 kann erfindungsgemäß zwischen einer Öffnungsposition und einer Schließposition antriebsfrei bewegt werden. Wenn der Schlitten 20 in die Betriebsposition B verfährt, stößt der Schlitten 20 oder die Kamera 40 das Deckelelement 18 in die Öffnungsposition auf. Wenn der Schlitten 20 zurück in die Ruheposition A verfährt, wird das Deckelelement 18 durch das lösbare Verbindungselement 27 in die Schließposition mitgezogen.

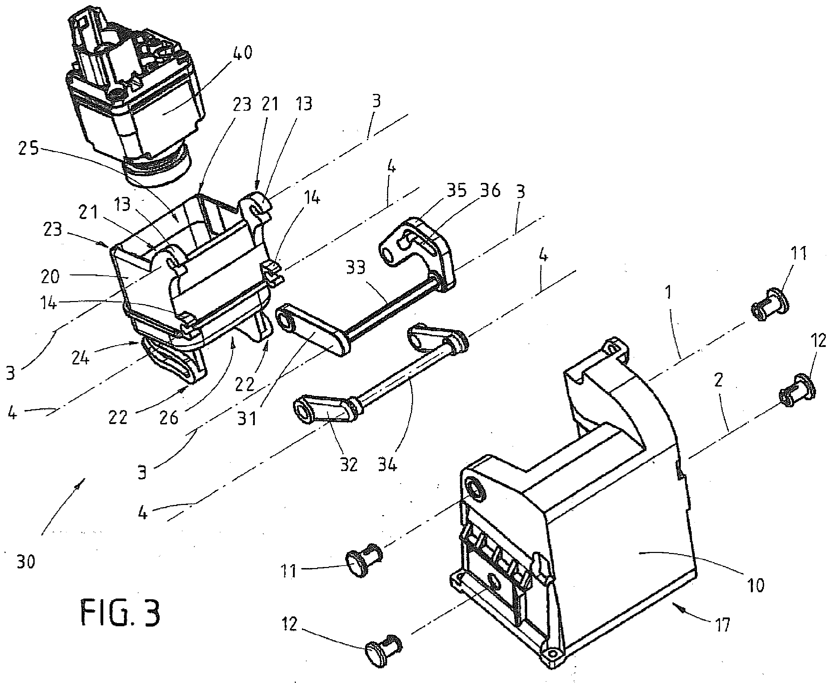

Figur 3 zeigt das erfindungsgemäße Getriebe 30 in einer Explosionsansicht, welches ein erstes Schaukelelement 31 und ein zweites Schaukelelement 32 aufweist. Die Schaukelelemente 31, 32 sind mit dem Schlitten 20 gelenkig verbunden. Die Schaukelelemente 31, 32 werden verschwenkbar mittels eines ersten 11 und eines zweiten Gelenks 12 an einem Gehäuse 10 angebracht. Die Gelenke 11, 12 sind dabei in Form von Schrauben abgebildet, die durch Durchbrüche in den Armen der Schaukelelemente 31, 32 geführt und mit einer Mutter innenseitig an den Schaukelelementen 31, 32 gesichert werden. Jedes Schaukelelement 31, 32 weist ein Verbindungselement 33, 34 auf, das den Schaukelsitz für den Schlitten 20 bildet, indem es jeweils zwei Arme des jeweiligen Schaukelelementes 33, 34 verbindet. Der Schlitten 20 wird mittels eines dritten 13 und eines vierten Gelenks 14 schwenkbar an den Verbindungselementen 33, 34 angeordnet. Das dritte 13 und das vierte Gelenk 14 sind jeweils in Form von zwei abgewinkelten Schlüsselmaulen an den Seiten der Verbindungselemente 33, 34 ausgebildet, die eine Drehbewegung des Schlittens 20 um die Verbindungselemente 33, 34 ermöglichen. Die vier Gelenke 11, 12, 13, 14 ermöglichen ferner, dass der Schlitten 20 eine zweiphasige, wellenartige bzw. sinusartige Bewegung zwischen einer Ruheposition A und einer Betriebsposition B ausführen kann.

Der Schlitten 20 wird in einem Gehäuse 10 aufgenommen, welches eine Öffnung 17 aufweist, durch welche der Schlitten 20 und die Kamera 40 nach außen zeigen können. Das Getriebe 30 umfasst erfindungsgemäß eine erste unbeweglich am Gehäuse 10 angeordnete Achse 1, die durch das erste Gelenk 11 verläuft, und eine zweite unbeweglich am Gehäuse 10 angeordnete Achse 2, die durch das zweite Gelenk 12 verläuft. Die erste Achse 1 ist dabei parallel zur zweiten Achse 2 ausgerichtet, wobei eine hintere Unterseite 21 des Schlittens 20 um die erste Achse 1 und die vordere Unterseite 22 des Schlittens 20 um die zweite Achse 2 verschwenkt werden kann. Die Erstreckungsrichtung der Verbindungselemente 33, 34 bestimmt eine dritte bewegliche Achse 3 am ersten Schaukelelement 31 und eine vierte bewegliche Achse 4 am zweiten Schaukelelement 32, die der Erstreckungsrichtung entlang der zwei Gelenke 13 und entlang der zwei Gelenke 14 im eingebauten Zustand entspricht. Das Getriebe 30 ist derart ausgebildet, dass sich die dritte Achse 3 stets parallel zur vierten Achse 4 sowie zur ersten Achse 1 und zur zweiten Achse 2 erstreckt, wobei die dritte 3 und die vierte Achse 4 jeweils um die erste 1 und um die zweite Achse 2 zusammen mit dem jeweiligen Schaukelelement 31, 32 mitgeschwenkt werden. Dabei bewegt sich der Schlitten 20 außerdem mit einer hinteren Oberseite 23 um die dritte bewegliche Achse 3 und mit einer vorderen Oberseite 24 um die vierte bewegliche Achse 4. Das erste Schaukelelement 31 ist mit einem Führungsarm 35 ausgeführt, der eine Führung 36 aufweist. Die Führung 36 wirkt erfindungsgemäß mit einem Gleitelement 16 eines nicht dargestellten Antriebes 50 zusammen, um das erste Schaukelelement 31 zu verschwenken. Die Führung 36 ist dabei als eine Nut in dem Führungsarm 35 des ersten Schaukelelementes 31 ausgebildet. Die Führung 36 weist eine bogenförmige Form auf, die einen Scheitelpunkt und zwei Anschlagpunkte umfasst, um eine zweiphasige Bewegung des Schlittens 20 zu realisieren.

Der Schlitten 20 ist mit einer gehäuseseitigen Montageöffnung 25 ausgebildet, um eine Kamera 40 aufzunehmen. Durch die Montageöffnung 25 kann die Kamera 40 einfach eingeführt oder ausgetauscht werden. Vorteilhafterweise kann die Montageöffnung 25 zur Aufnahme von unterschiedlichen Kameramodellen ausgebildet sein. Die Kamera 40 durch einen Form- und/oder Kraftschluss zuverlässig im Schlitten 20 gehalten werden und/oder mit zusätzlichen Rast- und/oder Klemmelementen im Schlitten 20 gesichert werden. Außerdem weist der Schlitten 20 eine nach außen gerichtete Aufnahmeöffnung 26 auf, durch welche die Kamera 40 im ausgefahrenen Zustand den Außenbereich aufnehmen kann. Die Kamera 40 kann dabei zwischen einer eingefahrenen Position und einer ausgefahrenen Position bewegt werden, wenn der Schlitten 20 sich zwischen der Ruheposition A und der Betriebsposition B verschwenkt.

Figuren 4a, 4b und 4c zeigen in einer Seitenansicht wie das erfindungsgemäße Getriebe 30 den Schlitten 20 zwischen einer Ruheposition A der Figur 4a und einer Betriebsposition B der Figur 4c antreibt. In der ersten Bewegungsphase I zwischen der Position in Figur 4a und in Figur 4b verschwenkt sich eine hintere Unterseite 21 des Schlittens 20 um eine erste Achse 1 und eine vordere Unterseite 22 des Schlittens 20 um eine zweite Achse 2. In der zweiten Bewegungsphase II zwischen der Position in Figur 4b und in Figur 4c verschwenkt sich eine hintere Oberseite 23 des Schlittens 20 in eine entgegengesetzte Richtung entlang einer bogenähnlichen Kurve um eine dritte Achse 3 und eine vordere Oberseite 24 des Schlittens 20 erfährt eine Kippbewegung um eine vierte Achse 4. Der Schlitten 20 führt somit einen ersten Bogen entlang des Pfeils I in Figur 4b und einen zweiten Bogen entlang des Pfeils II in Figur 4c aus, die zusammen eine sinusähnliche Bewegungskurve des Schlittens 20 ergeben. Es kann dabei vorgesehen sein, dass in der zweiten Bewegungsphase II eine Bewegung des Schlittens 20 um die zweite Achse 2 blockiert ist. Dabei wird der Schlitten 20 in der ersten Bewegungsphase I zwischen der Position in Figur 4a und in Figur 4b beinahe synchron zusammen mit den schwenkenden Schaukelelementen 31, 32 um die Achsen 1, 2 in die Richtung der Betriebsposition B in Figur 4c mitgeschwenkt. In der zweiten Bewegungsphase II kann das zweite Schaukelelement 32 gestoppt werden, wobei das erste Schaukelelement 31 weiterhin eine schwenkende Bewegung ausführen kann, und wobei die hintere Oberseite 23 des Schlittens 20 in der Sicht der Figuren 4a bis 4c weiterhin nach unten in Richtung zur Betriebsposition B bewegt wird und gleichzeitig nach rechts um die dritte Achse 3 gekippt wird, während die vordere Oberseite 24 des Schlittens 20 lediglich nach rechts um die vierte Achse 4 gekippt wird.

Ebenfalls kann vorgesehen sein, dass die erste Bewegungsphase I und die zweite Bewegungsphase II sich zumindest teilweise überlagern. Dabei können die hintere 21 und die vordere Unterseite 22 des Schlittens 20 um die erste 1 und um die zweite Achse 2 verschwenkt werden, wobei der Schlitten 20 eine Schwenkbewegung entlang des Pfeils I in Figur 4b ausführt, und gleichzeitig können die Oberseiten 23, 24 des Schlittens 20 nach rechts entlang des Pfeils II in Figur 4c gekippt werden. Der Schlitten 20 durchfährt dabei eine wellenartige Bewegung zuerst entlang des Pfeils I in Figur 4b und anschließend entlang des Pfeils II in Figur 4c.

Das erste Schaukelelement 31 weist gemäß den Figuren 4a bis 4c einen Führungsarm 35 auf, der mit einer Führung 36 ausgeführt ist, in die ein Gleitelement 16 eines nicht dargestellten Antriebes 50 eingreift, um das erste Schaukelelement 31 zu verschwenken und somit das zweite Schaukelelement 32 über den Schlitten 20 ebenfalls in Gang zu setzen. Die erfindungsgemäße Vorrichtung weist dabei ein Gehäuse 10 auf, welches das Getriebe 30 aufnimmt und eine Öffnung 17 aufweist, durch die der Schlitten 20 in der Betriebsposition B der Figur 4c hinausragen kann. Die Öffnung 17 im Gehäuse 10 wird mit einem Deckelelement 18 in der Ruheposition A der Figur 4a verschlossen. Das Deckelelement 18 kann dabei die Kamera 40 in der Ruheposition A abdecken und schützen. Das Deckelelement 18 ist mittels eines Drehgelenks 19 drehbar und lösbar am Gehäuse 10 angeordnet, wobei das Deckelelement 18 ohne einen Antrieb durch den Schlitten 20 aufgestoßen werden kann und/oder zurückgezogen werden kann. Das Deckelelement 18 steht dabei über ein lösbares Verbindungselement 27 mit dem Schlitten 20 in Wirkverbindung.

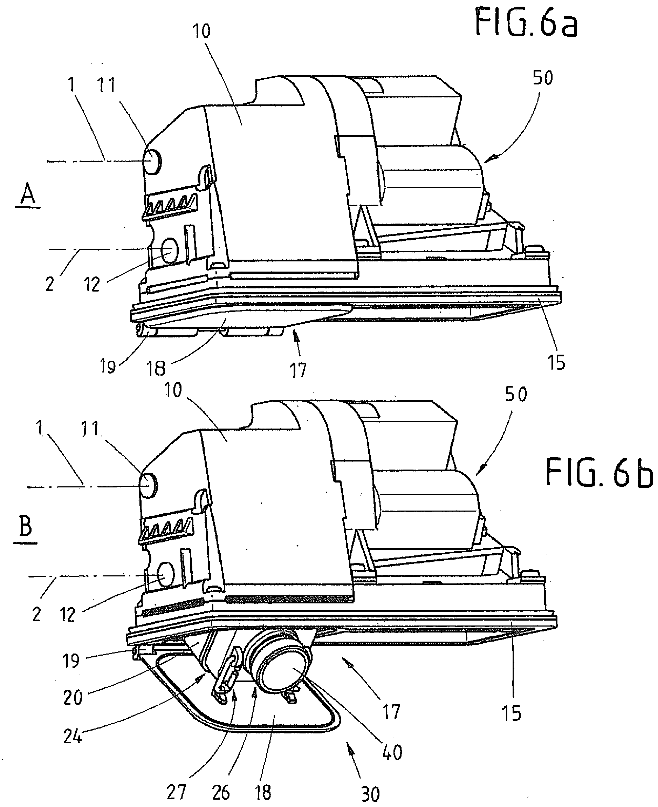

Die Figuren 5a, 5b und 6a, 6b zeigen die erfindungsgemäße Vorrichtung in einer perspektivischen Ansicht von oben und von unten, wobei die Figuren 5a und 6a die Vorrichtung in einer Ruheposition A des Schlittens 20 und die Figuren 5b und 6b die Vorrichtung in einer Betriebsposition B zeigen. Die Vorrichtung umfasst ein Gehäuse 10, welches einen Gehäusedeckel 15 aufweist, der aus dem Fahrzeug nach außen zeigt. Im Gehäusedeckel 15 ist eine Öffnung 17 vorgesehen, durch die ein bewegbarer Schlitten 20 aus der Ruheposition A in die Betriebsposition B verfahren kann, wobei in der Betriebsposition B eine Kamera 40, die im Schlitten 20 austauschbar angeordnet ist, aus der Öffnung 17 herausragt und den Außenbereich des Fahrzeugs aufnehmen kann. Der Schlitten 20 weist an dieser Seite eine Aufnahmeöffnung 26 auf, durch die das Objektiv der Kamera 40 herausschauen kann. Am Gehäusedeckel 15 ist ein Deckelelement 18 angeordnet, welches die Öffnung 17 in der Ruheposition A des Schlittens 20 abdeckt. Hierbei ist das Deckelelement 18 mittels eines Drehgelenks 19 lösbar am Gehäuse 10 gelagert. An der Innenseite des Gehäuses 10, die in den Figuren 5a und 5b zu sehen ist, ist das Gehäuse 10 mit einer weiteren Öffnung ausgeführt, durch die die Kamera 40 bei Montage in eine Montageöffnung 25 des Schlittens 20 eingeführt werden kann. Dabei kann die Kamera 40 durch einen Form- und/oder Kraftschluss oder mittels Rastelemente verrutschfest im Schlitten 20 gehalten werden. Das Gehäuse 10 kann ein Getriebe 30 und einen Antrieb 50 umschließen, wobei das Getriebe 30 zum Antreiben des Schlittens 20 dient. Der Antrieb 50 ist als ein Zahnradantrieb mit einem Gleitelement 16 ausgeführt, welches in eine Führung 36 an einem Führungsarm 35 eines ersten Schaukelelementes 31 des Getriebes 30 eingreift und das erste Schaukelelement 31 in Bewegung setzt. Dabei überträgt das erste Schaukelelement 31 die Bewegung an den Schlitten 20 und weiterhin an ein zweites Schaukelelement 32. Die Schaukelelemente 31, 32 sind mittels zweier Gelenke 11, 12 drehbar entsprechend um eine erste Achse 1 und eine zweite Achse 2 am Gehäuse 10 gelagert. Das Getriebe 30 ist erfindungsgemäß derart ausgeführt, dass der Schlitten 20 eine zweiphasige, wellenartige Bewegung zwischen der Ruheposition A und der Betriebsposition B ausführt, wobei in der zweiten Bewegungsphase II eine hintere Oberseite 23 und eine vordere Oberseite 24 um eine dritte Achse 3 und eine nicht dargestellte Achse 4 verschwenkt werden.

Vorteilhafterweise kann das Deckelelement 18 bei einem Unfall bzw. einem Zusammenstoß mit einem anderen Fahrzeug oder einem anderen Objekt oder einem Benutzer leicht vom Drehgelenk 19 abfallen, um den Stoß an die Vorrichtung nicht zu übertragen und um das andere Fahrzeug und das andere Objekt nicht zu beschädigen oder den Benutzer nicht zu verletzen. Erfindungsgemäß erfordert das Deckelelement 18 keinen besonderen Antrieb. Das Deckelelement 18 kann zwischen einer Öffnungsposition und einer Schließposition bzgl. der Öffnung 17 durch den Schlitten 20 gebracht werden, wobei der Schlitten 20 ein lösbares Verbindungselement 27 zum Deckelelement 18 aufweist.

Erfindungsgemäß kann ferner eine in den Figuren 5a bis 6b nicht dargestellte Schutzmembran 9 vorgesehen sein, um den freien Raum zwischen der Öffnung 17 im Gehäuse 10 und dem Schlitten 20 abzudichten. Die Schutzmembran 9 kann vorteilhafterweise das Eindringen von Schmutzpartikeln und Feuchtigkeit in das Gehäuse 10 verhindern und die Kamera 40 vor Witterungseinflüssen schützen. Die Schutzmembran 9 kann, wie zuvor in Figur 2 gezeigt ist, als eine Balgenmembran ausgeführt sein. Die Schutzmembran 9 kann aus einem elastischen Material ausgeführt sein, wobei während der Bewegung des Schlittens 20 die Schutzmembran 9 verformt werden kann.

Außerdem kann vorgesehen sein, dass die Öffnung 17 mit einem Kragenelement aus einem elastischen Material ausgebildet sein kann, an welchem das Deckelelement 18 abfedern kann, um Schließgeräusche zu verhindern, wenn der Schlitten 20 in die Ruheposition A zurückfährt.

Das Gehäuse 10 der Vorrichtung und/oder das Getriebe 30 und/oder der Schlitten 20 und/oder die Schaukelelemente 31, 32 können beispielsweise aus Kunststoff ausgebildet sein und durch einen Formprozess wie Formgießen oder Spritzgießen hergestellt werden. Das Gehäuse 10 und das Getriebe 30, einschließlich der Schaukelelemente 31, 32, können einem ersten Material und die Schutzmembran 9 und das Kragenelement aus einem zweiten Material hergestellt werden, wobei das erste Material einen höheren Härtegrad aufweisen kann als das zweite Material.

### Bezugszeichenliste

- 1: erste Achse
- 2: zweite Achse
- 3: dritte Achse
- 4: vierte Achse
- 5: Lager
- 6: inneres Lagerelement
- 7: äußeres Lagerelement
- 9: Schutzmembran

- 10: Gehäuse
- 11: erstes Gelenk
- 12: zweites Gelenk
- 13: drittes Gelenk
- 14: viertes Gelenk
- 15: Gehäusedeckel
- 16: Gleitelement
- 17: Öffnung im Gehäuse
- 18: Deckelelement
- 19: Drehgelenk des Deckelelementes

- 20: Schlitten
- 21: hintere Unterseite des Schlittens
- 22: vordere Unterseite des Schlittens
- 23: hintere Oberseite des Schlittens
- 24: vordere Oberseite des Schlittens
- 25: Montageöffnung
- 26: Aufnahmeöffnung
- 27: lösbares Verbindungselement des Deckelelementes 18

- 30: Getriebe
- 31: erstes Schaukelelement
- 32: zweites Schaukelelement
- 33: erstes Verbindungselement des ersten Schaukelelementes
- 34: zweites Verbindungselement des zweiten Schaukelelementes
- 35: Führungsarm des ersten Schaukelelementes
- 36: Führung im Führungsarm

- 40: Kamera

- 50: Antrieb

- A: Ruheposition
- B: Betriebsposition

- I: erste Bewegungsphase
- II: zweite Bewegungsphase

## Patentansprüche

1. Vorrichtung zur Aufnahme einer Kamera (40), die insbesondere als Einparkhilfe eines Kraftfahrzeuges dient, mit
einem Gehäuse (10), in dem ein Schlitten (20) bewegbar aufgenommen ist, an dem die Kamera (40) befestigbar ist,
wobei der Schlitten (20) durch ein Getriebe (30) antreibbar ist, welches Getriebe (30) ein erstes Schaukelelement (31) und ein zweites Schaukelelement (32) aufweist, die mit dem Schlitten (20) gelenkig verbunden sind,
und wobei jedes Schaukelelement (31, 32) derart drehbar am Gehäuse (10) gelagert ist und der Schlitten (20) derart drehbar an jedem Schaukelelement (31, 32) gelagert ist, dass der Schlitten (20) zwischen einer Ruheposition (A) und einer Betriebsposition (B) mindestens eine erste Bewegungsphase (I) und eine zweite Bewegungsphase (II) ausführt.

2. Vorrichtung nach Anspruch 1,
**dadurch gekennzeichnet,**
**dass** der Schlitten (20) eine gehäuseseitige Montageöffnung (25), um eine Kamera (40) austauschbar aufzunehmen, und/oder eine nach außen zeigende Aufnahmeöffnung (26) aufweist, durch welche die Kamera (40) nach außen gerichtet ist.

3. Vorrichtung nach Anspruch 1 oder 2,
**dadurch gekennzeichnet,**
**dass** das Getriebe (30) eine erste Achse (1) am Gehäuse (10) aufweist, um die sich das erste Schaukelelement (31) verschwenkt, und eine zweite Achse (2) am Gehäuse (10), um die sich das zweite Schaukelelement (32) verschwenkt, und dass insbesondere die erste Achse (1) parallel zur zweiten Achse (2) verläuft.

4. Vorrichtung nach einem der vorhergehenden Ansprüche,
**dadurch gekennzeichnet,**
**dass** das erste Schaukelelement (31) mittels eines ersten Gelenks (11) am Gehäuse (10) und das zweite Schaukelelement (32) mittels eines zweiten Gelenks (12) am Gehäuse (10) gelagert ist, wobei insbesondere die erste Achse (1) durch das erste Gelenk (11) und die zweite Achse (2) durch das zweite Gelenk (12) verläuft.

5. Vorrichtung nach einem der vorhergehenden Ansprüche,
**dadurch gekennzeichnet,**
**dass** das Getriebe (30) eine dritte bewegliche Achse (3) am ersten Schaukelelement (31) aufweist, um die sich der Schlitten (20) verschwenkt, und eine vierte bewegliche Achse (4) am zweiten Schaukelelement (32), um die sich der Schlitten (20) verschwenkt, und dass insbesondere das Getriebe (30) derart aufgebaut ist, dass die dritte Achse (3) während der Bewegung des Schlittens (20) parallel zur vierten Achse (4) bewegt.

6. Vorrichtung nach einem der vorhergehenden Ansprüche,
**dadurch gekennzeichnet,**
**dass** das erste Schaukelelement (31) ein erstes Verbindungselement (33) aufweist, an welchem der Schlitten (20) mittels eines dritten Gelenks (13) drehbar gelagert ist, und das zweite Schaukelelement (32) ein zweites Verbindungselement (34) aufweist, an welchem der Schlitten (20) mittels eines vierten Gelenks (14) drehbar gelagert ist, wobei insbesondere die dritte Achse (3) durch das dritte Gelenk (13) und die vierte Achse (4) durch das vierte Gelenk (14) verläuft.

7. Vorrichtung nach einem der vorhergehenden Ansprüche,
**dadurch gekennzeichnet,**
**dass** das Getriebe (30) vier Gelenke (11, 12, 13, 14) umfasst, um den Schlitten (20) zwischen der Ruheposition (A) und der Betriebsposition (B) zu führen.

8. Vorrichtung nach einem der vorhergehenden Ansprüche,
**dadurch gekennzeichnet,**
**dass** während der ersten Bewegungsphase (I) eine hintere Unterseite (21) des Schlittens (20) sich um die erste Achse (1) und eine vordere Unterseite (22) des Schlittens (20) sich um die zweite Achse (2) verschwenkt, und
**dass** insbesondere während der zweiten Bewegungsphase (II) eine hintere Oberseite (23) des Schlittens (20) eine Kippbewegung um die dritte Achse (3) und eine vordere Oberseite (24) des Schlittens (20) eine Kippbewegung um die vierte Achse (4) ausführt.

9. Vorrichtung nach einem der vorhergehenden Ansprüche,
**dadurch gekennzeichnet,**
**dass** das Getriebe (30) derart aufgebaut ist, dass während der zweiten Bewegungsphase (II) eine Bewegung des Schlittens (20) um die zweite Achse (2) blockiert ist, und dass insbesondere das Getriebe (30) derart aufgebaut ist, dass die erste Bewegungsphase (I) und die zweite Bewegungsphase (II) zumindest teilweise gleichzeitig erfolgen.

10. Vorrichtung nach einem der vorhergehenden Ansprüche,
**dadurch gekennzeichnet,**
**dass** das erste Schaukelelement (31) einen Führungsarm (35) aufweist, welcher mit einer Führung (36) ausgeführt ist, und dass insbesondere die Führung (36) mit einem Gleitelement (16) eines Antriebes (50) zusammenwirkt, um das erste Schaukelelement (31) in Bewegung zu setzen.

11. Vorrichtung nach einem der vorhergehenden Ansprüche,
**dadurch gekennzeichnet,**
**dass** das Gehäuse (10) eine Öffnung (17) aufweist, durch die der Schlitten (20) in der Betriebsposition (B) hinausragt, und dass insbesondere ein Deckelelement (18) vorgesehen ist, der in der Ruheposition (A) des Schlittens (20) die Öffnung (17) abschließt.

12. Vorrichtung nach einem der vorhergehenden Ansprüche,
**dadurch gekennzeichnet,**
**dass** eine Schutzmembran (9) vorgesehen ist, die den freien Raum zwischen der Öffnung (17) im Gehäuse (10) und dem Schlitten (20) abdichtend abschließt, um das Eindringen von Schmutzpartikeln und Feuchtigkeit in das Gehäuse (10) zu verhindern und/oder dass die Öffnung (17) ein Kragenelement aufweist, an welchem das Deckelelement (18) anliegt, wenn der Schlitten (20) sich in der Ruheposition (A) befindet, wobei insbesondere das Kragenelement aus einem elastischen Material ausgebildet ist.

13. Vorrichtung nach einem der vorhergehenden Ansprüche,
**dadurch gekennzeichnet,**
**dass** der Schlitten (20) und das Deckelelement (18) in mechanischer Wirkverbindung stehen, und dass während der Bewegung aus der Ruheposition (A) in die Betriebsposition (B) der Schlitten (20) das Deckelelement (18) in Bewegung setzt, wobei insbesondere der Schlitten (20) mindestens einen Stößel aufweist und/oder der Schlitten (20) mit dem Deckelelement (18) form- und/oder kraftschlüssig verbunden ist.

14. Vorrichtung nach einem der vorhergehenden Ansprüche,
**dadurch gekennzeichnet,**
**dass** das Deckelelement (18) mittels eines Drehgelenks (19) und/oder formschlüssig und/oder kraftschlüssig drehbar und/oder lösbar am Gehäuse (10) angeordnet ist.

15. Vorrichtung nach einem der vorhergehenden Ansprüche,
**dadurch gekennzeichnet,**
**dass** das Drehgelenks (19) am Lager (5) eines Gehäusedeckels (15) drehbar befestigt ist, wobei insbesondere das Lager (5) ein inneres Lagerelement (6) und zwei äußere Lagerelemente (7) aufweist.

## Claims

1. A device for holding a camera (40), which in particular serves as a parking aid of a motor vehicle, comprising
a housing (10), in which a carriage (20), to which the camera (40) can be secured, is movably received,
wherein the carriage (20) can be driven by a gear system (30), which gear system (30) has a first swivelling element (31) and a second swivelling element (32), which are connected to the carriage (20) in an articulated manner,
and wherein each swivelling element (31, 32) is rotatably mounted on the housing (10) and the carriage (20) is rotatably mounted on each swivelling element (31, 32), in such a way that the carriage (20), between a rest position (A) and an operating position (B), performs at least a first movement phase (I) and a second movement phase (II).

2. The device according to claim 1,
**characterised in that**
the carriage (20) has a housing-side mounting opening (25) in order to receive a camera (40) exchangeably, and/or has an outwardly pointing receiving opening (26), by which the camera (40) is directed outwardly.

3. The device according to claim 1 or 2,
**characterised in that**
the gear system (30) has a first axis (1) on the housing (10), about which first axis the first swivelling element (31) pivots, and a second axis (2) on the housing (10), about which second axis the second swivelling element (32) pivots, and **in that** in particular the first axis (1) runs parallel to the second axis (2).

4. The device according to any one of the preceding claims,
**characterised in that**
the first swivelling element (31) is mounted on the housing (10) by means of a first joint (11) and the second swivelling element (32) is mounted on the housing (10) by means of a second joint (12), wherein in particular the first axis (1) runs through the first joint (11) and the second axis (2) runs through the second joint (12).

5. The device according to any one of the preceding claims,
**characterised in that**
the gear system (30) has a third movable axis (3) on the first swivelling element (31), about which third axis the carriage (20) pivots, and a fourth movable axis (4) on the second swivelling element (32), about which fourth axis the carriage (20) pivots, and **in that** in particular the gear system (30) is constructed in such a way that the third axis (3) moves parallel to the fourth axis (4) during the movement of the carriage (20).

6. The device according to any one of the preceding claims,
**characterised in that**
the first swivelling element (31) has a first connection element (33), on which the carriage (20) is rotatably mounted by means of a third joint (13), and the second swivelling element (32) has a second connection element (34), on which the carriage (20) is rotatably mounted by means of a fourth joint (14), wherein in particular the third axis (3) runs through the third joint (13) and the fourth axis (4) runs through the fourth joint (14).

7. The device according to any one of the preceding claims, **characterised in that**
the gear system (30) comprises four joints (11, 12, 13, 14) in order to guide the carriage (20) between the rest position (A) and the operating position (B).

8. The device according to any one of the preceding claims,
**characterised in that**
during the first movement phase (I) a rear underside (21) of the carriage (20) pivots about the first axis (1) and a front underside (22) of the carriage (20) pivots about the second axis (2), and **in that**
in particular during the second movement phase (II) a rear upper side (23) of the carriage (20) performs a tilting movement about the third axis (3) and a front upper side (24) of the carriage (20) performs a tilting movement about the fourth axis (4).

9. The device according to any one of the preceding claims,
**characterised in that**
the gear system (30) is constructed in such a way that, during the second movement phase (II), a movement of the carriage (20) about the second axis (2) is blocked, and **in that**
in particular the gear system (30) is constructed in such a way that the first movement phase (I) and the second movement phase (II) are performed at least in part at the same time.

10. The device according to any one of the preceding claims,
**characterised in that**
the first swivelling element (31) has a guide arm (35), which is designed with a guide (36), and **in that** in particular the guide (36) cooperates with a sliding element (16) of a drive (50) in order to set the first swivelling element (31) in motion.

11. The device according to any one of the preceding claims,
**characterised in that**
the housing (10) has an opening (17), through which the carriage (20) protrudes in the operating position (B), and **in that** in particular a cover element (18) is provided, which, in the rest position (A) of the carriage (20), closes off the opening (17).

12. The device according to any one of the preceding claims,
**characterised in that**
a protective membrane (9) is provided, which sealingly closes off the free space between the opening (17) in the housing (10) and the carriage (20) in order to prevent the infiltration of dust particles and moisture into the housing (10), and/or **in that** the opening (17) has a collar element, against which the cover element (18) bears when the carriage (20) is in the rest position (A), wherein in particular the collar element is formed from a resilient material.

13. The device according to any one of the preceding claims,
**characterised in that**
the carriage (20) and the cover element (18) are in mechanical operative connection to one another, and **in that**, during the movement from the rest position (A) into the operating position (B), the carriage (20) sets the cover element (18) in motion, wherein in particular the carriage (20) has at least one ram and/or the carriage (20) is connected to the cover element (18) in a positively engaged and/or frictionally engaged manner.

14. The device according to any one of the preceding claims,
**characterised in that**
the cover element (18) is arranged rotatably and/or releasably on the housing (10) by means of a rotational joint (19) and/or with positive engagement and/or frictional engagement.

15. The device according to any one of the preceding claims,
**characterised in that**
the rotational joint (19) is rotatably secured to the bearing (5) of a housing cover (15), wherein in particular the bearing (5) has an inner bearing element (6) and two outer bearing elements (7).

## Revendications

1. Dispositif destiné à recevoir une caméra (40), qui sert notamment d'aide au stationnement d'un véhicule automobile, avec
un boîtier (10), dans lequel un chariot (20) sur lequel peut se fixer la caméra (40) est réceptionné de manière mobile,
le chariot (20) pouvant être entraîné par une transmission (30), laquelle transmission (30) comporte un premier élément à bascule (31) et un deuxième élément à bascule (32) qui sont reliés de manière articulée avec le chariot (20),
et chaque élément à bascule (31, 32) étant logé de manière rotative sur le boîtier (10) et le chariot (20) étant logé de manière rotative sur chaque élément à bascule (31, 32) de telle sorte que le chariot (20) réalise entre une position de repos (A) et une position de service (B) au moins une première phase de déplacement (I) et une deuxième phase de déplacement (II) .

2. Dispositif selon la revendication 1, **caractérisé,**
**en ce que** le chariot (20) comporte côté boîtier un orifice de montage (25), pour recevoir de manière interchangeable une caméra (40), et/ou un orifice de logement (26) dirigé vers l'extérieur, à travers lequel la caméra (40) est orientée vers l'extérieur.

3. Dispositif selon la revendication 1 ou 2, **caractérisé**
**en ce que** la transmission (30) comporte un premier axe (1) sur le boîtier (10), autour duquel pivote le premier élément à bascule (31) et un deuxième axe (2) sur le boîtier (10), autour duquel pivote le deuxième élément à bascule (32) et en ce que notamment le premier axe (1) s'écoule à la parallèle du deuxième axe (2).

4. Dispositif selon l'une quelconque des revendications précédentes, **caractérisé,**
**en ce que** le premier élément à bascule (31) est logé sur le boîtier (10) au moyen d'une première articulation (11) et le deuxième élément à bascule (32) est logé sur le boîtier (10) au moyen d'une deuxième articulation (12), notamment le premier axe (1) s'écoulant à travers la première articulation (11) et le deuxième axe (2) s'écoulant à travers la deuxième articulation (12).

5. Dispositif selon l'une quelconque des revendications précédentes, **caractérisé,**
**en ce que** la transmission (30) comporte un troisième axe (3) mobile sur le premier élément à bascule (31), autour duquel pivote le chariot (20) et un quatrième axe (4) mobile sur le deuxième élément à bascule (32), autour duquel pivote le chariot (20) et en ce que notamment la transmission (30) est structurée de telle sorte que pendant le déplacement du chariot (20), le troisième axe (3) se déplace à la parallèle du quatrième axe (4).

6. Dispositif selon l'une quelconque des revendications précédentes, **caractérisé,**
**en ce que** le premier élément à bascule (31) comporte un premier élément de liaison (33) sur lequel le chariot (20) est logé de manière rotative au moyen d'une troisième articulation (13), et le deuxième élément à bascule (32) comporte un deuxième élément de liaison (34) sur lequel le chariot (20) est logé de manière rotative au moyen d'une quatrième articulation (14), notamment le troisième axe (3) s'écoulant à travers la troisième articulation (13) et le quatrième axe (4) s'écoulant à travers la quatrième articulation (14) .

7. Dispositif selon l'une quelconque des revendications précédentes, **caractérisé,**
**en ce que** la transmission (30) comprend quatre articulations (11, 12, 13, 14) pour guider le chariot (20) entre la position de repos (A) et la position de service (B).

8. Dispositif selon l'une quelconque des revendications précédentes, **caractérisé,**
**en ce que** pendant la première phase de déplacement (1), une face inférieure (21) arrière du chariot (20) pivote autour du premier axe (1) et une face inférieure (22) avant du chariot (20) pivote autour du deuxième axe (2) et
**en ce que** notamment pendant la deuxième phase de déplacement (II), une face supérieure (23) arrière du chariot (20) effectue un basculement autour du troisième axe (3) et une face supérieure (24) avant du chariot (20) effectue un basculement autour du quatrième axe (4).

9. Dispositif selon l'une quelconque des revendications précédentes, **caractérisé,**
**en ce que** la transmission (30) est structurée de telle sorte que pendant la deuxième phase de déplacement (II), un déplacement du chariot (20) autour du deuxième axe (2) est bloqué et
**en ce que** notamment la transmission (30) est structurée de telle sorte que la première phase de déplacement (1) et la deuxième phase de déplacement (II) ont lieu au moins en partie simultanément.

10. Dispositif selon l'une quelconque des revendications précédentes, **caractérisé,**
**en ce que** le premier élément à bascule (31) comporte un bras de guidage (35), lequel est réalisé avec un guide (36) et en ce que notamment le guide (36) coopère avec un élément coulissant (16) d'un entraînement (50), pour amener le premier élément à bascule (31) en déplacement.

11. Dispositif selon l'une quelconque des revendications précédentes, **caractérisé,**
**en ce que** le boîtier (10) comporte un orifice (17), à travers lequel le chariot (20) saillit dans la position de service (B) et en ce qu'il est prévu notamment un cache (18), qui dans la position de repos (A) du chariot (20) ferme l'orifice (17) .

12. Dispositif selon l'une quelconque des revendications précédentes, **caractérisé,**
**en ce qu'**il est prévu une membrane protectrice (9) qui ferme de manière étanche l'espace libre entre l'orifice (17) dans le boîtier (10) et le chariot (20), pour empêcher la pénétration de particules d'impuretés et d'humidité dans le boîtier (10) et/ou en ce que l'orifice (17) comporte un collet, sur lequel le cache (18) s' appuie lorsque le chariot (20) se trouve dans la position de repos (A), notamment le collet étant conçu dans une matière élastique.

13. Dispositif selon l'une quelconque des revendications précédentes, **caractérisé,**
**en ce que** le chariot (20) et le cache (18) sont en liaison mécanique active et en ce que pendant le déplacement de la position de repos (A) dans la position de service (B), le chariot (20) amène le cache (18) en déplacement, notamment le chariot (20) comportant au moins un coulisseau et/ou le chariot (20) étant relié par complémentarité de forme et/ou de force avec le cache (18).

14. Dispositif selon l'une quelconque des revendications précédentes, **caractérisé,**
**en ce que** le cache (18) est placé au moyen d'une articulation rotative (19) et/ou de manière rotative et/ou amovible par complémentarité de forme et/ou par complémentarité de force sur le boîtier (10).

15. Dispositif selon l'une quelconque des revendications précédentes, **caractérisé,**
**en ce que** l'articulation rotative (19) est fixée de manière rotative sur le palier (5) d'un couvercle de boîtier (15), notamment le palier (5) comportant un élément de palier (6) interne et deux éléments de palier (7) externes.
